# EUROPEAN PATENT SPECIFICATION

(11) **EP 3 835 138 B1**
(45) Date of publication and mention of the grant of the patent: **08.02.2023**
(21) Application number: 20212829.4
(22) Date of filing: 09.12.2020
(51) Int. Cl.: B60R 21/213, B60R 21/231, B60R 21/232

(54) **IMPROVEMENTS RELATING TO AIRBAGS**
VERBESSERUNGEN IM ZUSAMMENHANG MIT AIRBAGS
AMÉLIORATIONS RELATIVES AUX AIRBAGS

(30) Priority: 11.12.2019 GB 201918192
(43) Date of publication of application: 16.06.2021
(73) Proprietor: Nissan Motor Manufacturing (UK) Limited, Cranfield, Bedfordshire MK43 0DB (GB)
(72) Inventor: BLACK, Christian, Cranfield, Bedfordshire MK43 0DB (GB); GANNA-KNIGHT, Leo, Cranfield, Bedfordshire MK43 0DB (GB)

(56) References cited:
- EP-A1- 1 437 267
- US-A1- 2003 042 712
- US-A1- 2005 098 996
- US-A1- 2015 158 450

## Description

### Technical Field of the Invention

The present invention relates to vehicle curtain airbags. Aspects of the invention relate to a vehicle airbag, to a vehicle, and to a method of manufacturing a vehicle airbag.

### Background to the Invention

Airbags are inflatable restraints commonly used in passenger vehicles to restrain occupants within an occupant compartment of the vehicle in the event of a collision, rollover incident, or the like. An airbag comprises an inflatable cushion made from a flexible material defining at least one internal chamber into which pressurised gas is introduced when the airbag is deployed. The inflated airbag provides an energy absorbing layer between an occupant and a rigid component of the vehicle, dissipating the forces experienced by the occupant. Curtain airbags are used to provide an energy absorbing layer between the side windows of a vehicle and its occupants in the event of a side impact or rollover incident. Typically, curtain airbags are mounted in pairs inside the vehicle adjacent to the roof, one on either side of an occupant compartment.

In order to secure an airbag to the vehicle body or to some other fixed location, it is known to provide an aperture in a mounting region defined in a non-inflatable part of the airbag cushion. Curtain airbags may have a number of mounting tabs spaced along an upper edge of the airbag cushion, each tab having an aperture. Often a screw threaded fastener such as a bolt is inserted though the aperture to engage in a threaded aperture in the vehicle body, typically provided by a nut welded to the vehicle body. Alternatively, a mounting formation such as a hook may be affixed to the vehicle body and engaged through the aperture. The mounting regions are often reinforced, either by folding the material of the airbag cushion over and stitching to form a double thickness; or by sewing a reinforcing material to the airbag cushion material. In either case, this is a skilled operation with many potential failure modes in the manufacturing process.

The use of bolts and weld nuts to secure an airbag is also disadvantageous as they are heavy, adding to the overall weight of the vehicle; and are susceptible to cross threading. This is a particular problem for curtain airbags, where it can be difficult for an operative to hold the airbag in position whilst attempting to correctly insert a bolt into a weld nut in an overhead position. US2015/158450 A1 discloses a curtain airbag according to the preamble of claim 1.

US2005/098996A1 discloses a unitary plastic sleeve 52 which facilitates attachment of an inflatable chamber 50 for a knee bolster pad 12b to a receiving bracket 54 by a total of 16 bolts.

### Summary of the Invention

Aspects of the invention relate to a vehicle curtain airbag; to a vehicle; and to a method of manufacturing a vehicle airbag.

According to a first aspect of the invention, there is provided a vehicle curtain airbag comprising an inflatable cushion made from flexible material defining at least one internal chamber, the material also defining a mounting region for attachment of the airbag cushion to a fixing point in a vehicle, characterized in that: a plurality of polymeric mounting members are moulded to the material of the airbag cushion within at least two of the mounting regions; wherein at least one polymeric mounting member is profiled to fit against or within a feature of a vehicle cant rail to which it is to be assembled in use.

Moulding a polymeric mounting member to the airbag cushion material reinforces the material in the mounting region without the need for stitching.

At least one mounting member may comprise a mounting bush. The mounting bush may define a through bore. The mounting bush may be adapted to enable a threaded fastener such as a bolt to be inserted through the bore for engagement with a threaded aperture in the vehicle fixing point. An aperture may be defined in the mounting region in alignment with the through bore. In this case, the mounting bush may comprise a body portion which extends through the aperture; and flange portions which project radially outwardly at either end of the body portion, and which are moulded to opposed sides of the material. The bore may extend through the body portion. Alternatively, the mounting bush may comprise opposed body portions moulded on opposite sides of the cushion material, the opposed body portions each defining an aperture, which apertures are aligned to define a through bore. There may be a corresponding aperture through the cushion material in alignment with the apertures in the opposed body portions.

At least one mounting bush may be moulded as a single integral component. The mounting bush may be manufactured in a multi-stage moulding process.

At least one mounting member may comprise a push-fit mounting fastener. In this case, the mounting member may comprise an integrally moulded push-fit clip for insertion into an aperture in a vehicle fixing point. The push-fit clip may be a resilient push-fit clip. The push-fit clip may be a fir-tree clip.

At least one mounting member may have opposed portions moulded to either side of the cushion material in said mounting region. The mounting member may have a plurality of spaced projections which extend through the material between the opposed portions.

The airbag cushion may have a plurality of mounting regions with a polymeric mounting member being moulded to at least one of the mounting regions. Where the airbag cushion has two or more mounting regions, a respective polymeric mounting member may be moulded to each of two or more of the mounting regions. All the mounting members may be the same. Alternatively, at least one mounting member may be different from at least one other mounting member. At least one mounting member may be a mounting bush type mounting member as set out above; and at least one other mounting member may be a push-fit mounting fastener type mounting member as set out above.

The airbag cushion material may be a fabric. Material defining the mounting member may penetrate between fibres of the fabric.

In accordance with a second aspect of the invention, there is provided a vehicle comprising a vehicle curtain airbag according to the first aspect of the invention as set out above. Where a mounting member is a mounting bush, the airbag may be secured to a fixing point of the vehicle by means of a threaded fastener inserted through the bush and engaging in a threaded hole in the fixing point. Where the mounting member is a push-fit mounting fastener as set out above, the airbag may be secured to the fixing point by means of the push-fit clip engaging in a hole in the vehicle fixing point. The mounting member is profiled to fit against or within a feature of the vehicle. Such profiles may include hooks which hang the mounting member off a vehicle structural member, such as a cant rail, while airbag mounting bolts are fitted.

In accordance with a third aspect of the invention, there is provided a method of manufacturing a vehicle curtain airbag comprising an inflatable cushion made from flexible material defining at least one internal chamber, the method being characterized in comprising moulding a plurality of polymeric mounting members to the airbag cushion within non-inflatable mounting regions of the cushion;
wherein at least one polymeric mounting member is profiled to fit within or against a feature of a vehicle cant rail to which it is to be assembled in use.

The method may comprise manufacturing a vehicle airbag according to the first aspect of the invention as set out above.

The method may comprise moulding a mounting member in the form of a mounting bush defining a central bore. The mounting bush may be adapted to enable a threaded fastener, such as a bolt, to be inserted through the bore for engagement with a threaded aperture in the vehicle fixing point. The method may comprise forming an aperture through the cushion material in the mounting region in alignment with the through bore. The method may comprise moulding a mounting bush with a body portion extending through the aperture; and flange portions which project radially outwardly at either end of the body portion, which flange portions are moulded to opposed sides of the cushion material. The method may comprise moulding the mounting bush with a bore extending through the body portion. The method may comprise moulding the mounting bush as a single integral component in a single stage moulding operation. The method may comprise moulding the mounting bush in a multi-stage moulding process.

The method may comprise moulding opposed body portions on either side of the cushion material in a first stage, each body portion having an aperture, and subsequently moulding an annular body portion extending through an aperture in the cushion material and the apertures in the opposed body portions in a second stage. The method may comprise producing a first stage moulding comprising a body portion extending through an aperture in the cushion material, and a first flange at a first end of the body portion which is moulded to the cushion material on one side; and subsequently over moulding a second stage moulding about a second end of the body portion, the second stage moulding forming a second flange moulded to the cushion material on a second side of the cushion material opposite to the first.

The method may comprise moulding a mounting member in the form of a push-fit mounting fastener having an integrally moulded push-fit clip for insertion into an aperture in a vehicle fixing point. The push-fit clip may be a resilient push-fit clip. The push-fit clip may be a fir-tree clip.

The method may comprise moulding the mounting member with a plurality of spaced formations which extend through the cushion material.

The method may comprise manufacturing an airbag in which the airbag cushion has a plurality of mounting regions, the method comprising moulding a polymeric mounting member to at least two of the mounting regions. The method may comprise moulding a respective polymeric mounting member moulded to each of two or more mounting regions of an airbag cushion. In an embodiment, all the respective mounting members are the same type. Alternatively, at least one respective mounting member may be different from at least one other respective mounting member. The method may comprise moulding at least one respective mounting member which is a mounting bush type mounting member and moulding at least one other respective mounting member which is a push-fit mounting fastener type mounting member.

The method may comprise moulding opposed portions of a mounting member to either side of the cushion material in said mounting region. The method may comprise moulding a plurality of spaced projections extending through the material between the opposed portions. In an embodiment, the method comprises moulding each of the opposed portions with an aperture, the apertures being aligned on a common axis. The method may comprise forming a corresponding aperture in the cushion material which aligns with the apertures in the opposed portions for each mounting member. The method may comprise forming the aperture in the cushion material either before or after moulding the opposed portions. The method may comprise forming the or each aperture in the cushion material when mounting the airbag to a vehicle.

The airbag cushion material may be a fabric; and the method may comprise moulding the mounting member such that material defining the mounting member penetrates between fibres of the fabric.

The method also comprises customising at least one mounting member to fit a location on a vehicle to which the airbag is to be fitted, by profiling the mounting member so as to fit against or within a feature of a vehicle to which it is to be assembled.

The method may comprise forming an aperture in the cushion material by punching or laser cutting.

### Detailed Description of the Invention

In order that the invention may be more clearly understood, embodiments thereof will now be described - by way of example only - with reference to the accompanying drawings, of which:
- Figure 1: is a somewhat schematic elevational view of a curtain airbag in accordance with an aspect of the invention in an unrolled configuration, illustrating the location of mounting regions along an upper edge;
- Figure 2: shows the curtain airbag of Figure 1 in a rolled configuration for attachment to a vehicle;
- Figure 3: is a cross sectional view taken on line X-X in Figure 2 through a first of the mounting regions of the curtain airbag of Figures 1 and 2, illustrating a first embodiment of a mounting member in the form of a mounting bush moulded to the cushion;
- Figure 4: is a cross sectional view through a moulding apparatus illustrating a method of moulding the mounting bush shown in Figure 3 to a mounting region of an airbag in accordance with an aspect of the invention;
- Figure 5: is a cross sectional view through a mounting region of an airbag in accordance with the invention, illustrating an alternative embodiment of a mounting bush similar to that of Figure 3 but which is moulded to the airbag in a two stage process;
- Figures 6 to 8: are a series of cross sectional views illustrating a further alternative embodiment of a mounting bush similar to that in Figure 3, but which is moulded to the airbag in a two stage process;
- Figure 9: is a perspective view of a still further embodiment of a mounting bush similar to that in Figure 3, but which can be moulded to the mounting region before forming an aperture through the mounting region; and
- Figure 10: is a cross sectional view taken on line Y-Y in figure 2 through a second of the mounting regions of the curtain airbag of Figures 1 and 2, illustrating an alternative embodiment of a mounting member in the form of a push-fit mounting fastener having an integrally moulded resilient clip.

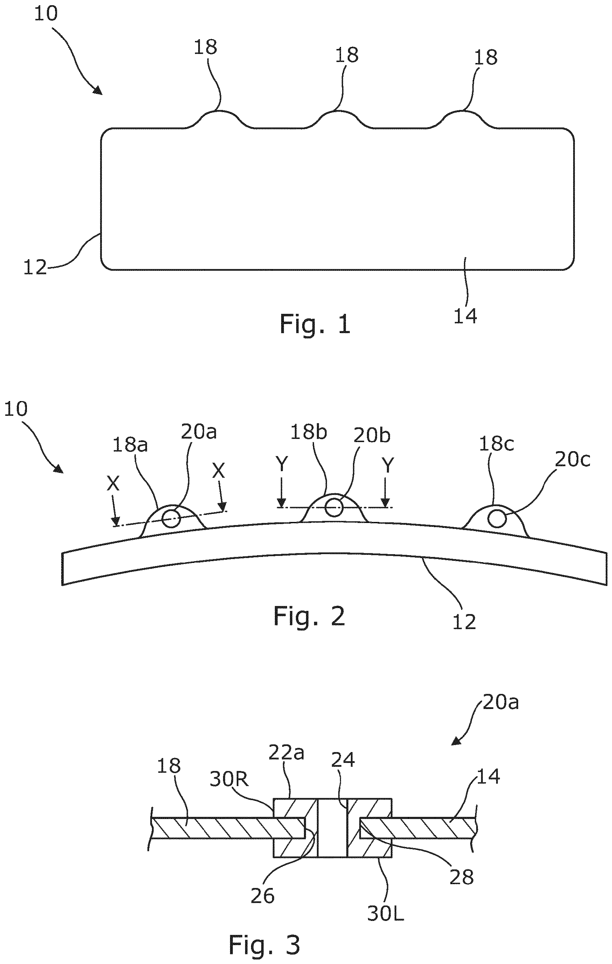

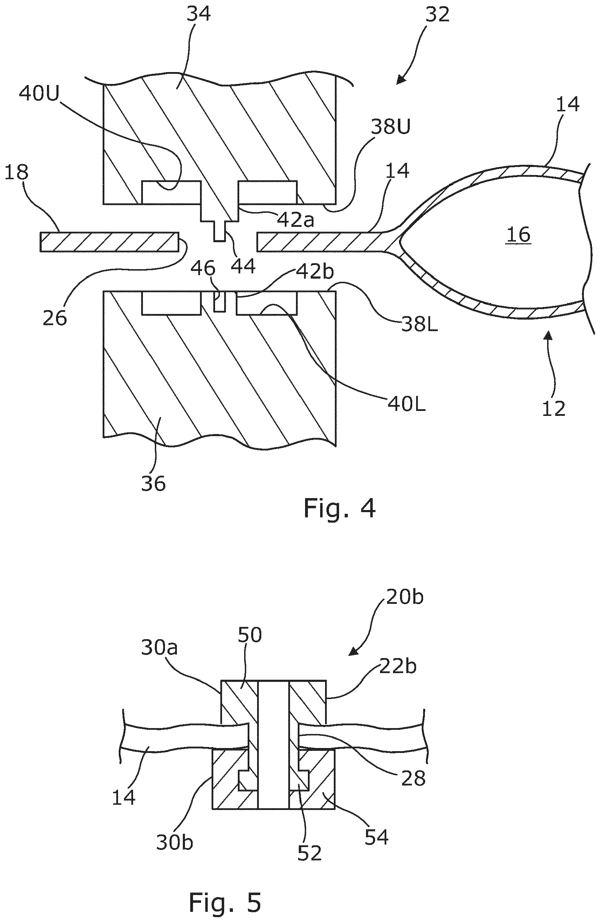

A curtain airbag 10 is illustrated in Figure 1 in an un-rolled but uninflated configuration prior to assembly into a vehicle. The curtain airbag 10 comprises an inflatable cushion 12 made from flexible material 14 which defines at least one internal cavity (16, fig. 4). The flexible material can be any suitable material for airbags, as is known in the art. The flexible material may, for example, be a woven fabric; and could be made of nylon and/or polyester. The inflatable cushion 12 may be constructed from two or more layers of flexible material assembled together. Alternatively, the inflatable cushion can be formed by a single layer of material which is woven to define the at least one inflatable cavity 16.

A number of mounting regions 18, identified individually as 18a, 18b, 18c, are spaced apart along an edge of the airbag cushion which is uppermost when the airbag is assembled in a vehicle. The mounting regions 18a, 18b, 18c are defined in a non-inflatable edge portion of the airbag cushion, which lies outside the, or each, internal cavity 16. Each mounting region 18a, 18b, 18c forms an attachment point for securing the airbag to a fixing point on the vehicle. For a curtain airbag 10, the fixing point will typically be on a structural element of the vehicle body, such as a cant rail (not shown). In the embodiment shown, each mounting region 18a, 18b, 18c is provided in the form of a discrete tab portion; but this is not essential. In alternative arrangements, a number of mounting regions could be spaced apart along a continuous edge portion of an airbag cushion; or an airbag cushion may comprise a variety of different mounting regions, some of which are in the form of tabs and some of which are not.

Figure 2 shows the curtain airbag cushion 12 in a rolled up configuration in which it is assembled to the vehicle. The curtain airbag cushion 12 may be encased in at least one airbag wrap (not shown) to protect it; and to hold it in its rolled up configuration, prior to deployment. Once the curtain airbag 10 is correctly assembled to the vehicle, the headlining and any required pillar trims can be fitted to the vehicle. These will cover the curtain airbags 10 when fitted, obscuring them from view. The airbag cushion 12 is operatively connected to a source of pressurised gas (not shown) forming part of a deployment system for the airbag.

In accordance with an aspect of the invention, mounting members 20a, 20b, and 20c are integrally moulded onto the cushion material in the mounting regions 18a, 18b, 18c. The mounting members 20 can be made of any material suitable for moulding to the airbag cushion 12. Typically, the mounting members 20 are made from polymeric materials, including thermoplastic polymeric materials such as polypropylene (PP) or nylon; either of which could be filled with glass fibres for strength. The mounting members 20 can take different forms.

In one embodiment as illustrated in Figure 3, a mounting member 20a on a first of the mounting regions 18a is in the form of a mounting bush 22a defining a central bore 24 which is moulded through an aperture 26 in the cushion material 14. The mounting bush 22a is used to mount the airbag by inserting a threaded fastener such as a bolt through the bush for engagement with a threaded hole on the vehicle's body or other fixing point. Alternatively, a hook or other like attachment member attached to the vehicle body could be inserted through the bush. The mounting bush 22a reinforces the airbag cushion material 14 in the mounting region; avoiding the need to use stitching to either attach a reinforcing material, or to hold a folded over portion of the material in place. Inserting a fastening bolt through a mounting bush has also been found to be simpler than trying to insert a bolt through an aperture in the cushion material without a mounting bush. It may be preferred to insert the bolt through the bush prior to assembly to the vehicle, by using a retaining member such as a locking washer which grips the thread on the bolt.

The mounting bush 22a in this embodiment has a central, cylindrical body portion 28 which extends through the aperture 26 in the cushion material 14 with circular flanges 30L, 30R projecting radially outwardly at each end. The radial flanges 30 extend over the cushion material 14 surrounding the aperture on respective sides of the mounting region. The central bore 24 extends fully through the two flanges 30 and the cylindrical body portion 28.

The mounting bush 22a is a single integral component which is moulded in one piece to the mounting region 18a after the aperture 26 has been formed. A method of moulding the mounting bush 22a is illustrated schematically in Figure 4. A mould tool 32 has a first part 34 and a second part 36 which locate either side of a mounting region 18 of an airbag cushion 12 having an aperture 26. The aperture 26 may be formed by any suitable means, including punching or laser cutting or the like. The mounting region 18 is a non-inflatable part of the cushion material 14 lying outside an internal cavity 16. The cushion is not inflated at this stage; the spacing between sections of the cushion material 14 which defines the cavity 16 is exaggerated in Figure 4 for clarity.

The first and second parts 34, 36 of the mould tool are shown spaced from the cushion material; but in use, are brought together to clamp the mounting region 18 between their end faces 38U, 38L. Each part of the mould tool has an annular cavity 40U, 40L in its end face; and a central spigot 42a, 42b which aligns with aperture 26. The annular cavities 40 have a larger outer diameter than the aperture 26. The spigot 42a on the first part of the mould tool projects beyond the end face 38U of the tool, so as to locate within the aperture 26 in the cushion material; and to abut the spigot 42b on the second part of the tool 36 when the tool parts are brought together. A small diameter pin 44 on the end of the spigot 42a on the first tool part engages in a corresponding blind bore 46 formed in the end of the spigot 42b on the second part to align the spigots and to hold them in place. The spigots 42 have a diameter smaller than that of the aperture 26, and define the central bore 24 of the mounting bush. In use, the two parts 34, 36 of the mould tool are brought together to clamp the mounting region 18 of the cushion material 14 between them; and molten material for forming the mounting bush 22a is introduced into the cavities 40. The molten material fills the cavities 40 and passes through the aperture 26 in the cushion material about the spigots 42. Once the material has solidified sufficiently, the two parts of the tool 34, 36 are separated.

Figure 5 illustrates an alternative embodiment of a mounting bush 22b, which is similar to the bush 22a in Figure 3; but which is moulded in two stages. A first stage moulding 50 forms the central body portion 28 and a first flange 30a of the mounting bush at a first end of the central body portion. The first stage moulding 50 carries an assembly flange 52 which projects radially outwardly at the second end of the central body portion 28, spaced from the cushion material 14 on the opposite side of the mounting region to the first flange 30a. The assembly flange 52 is smaller than the first flange portion 30a. Once the first stage moulding 50 has solidified sufficiently, a second stage moulding 54 is moulded about the second end of the first moulding where it projects beyond the cushion material 14. The second stage moulding surrounds the assembly flange 52 to form a second flange 30b of the mounting bush which overlies the cushion material surrounding the aperture 26. Once both of the first and second stage mouldings 50, 54 have been produced, the cushion material 14 is firmly clamped between the first and second stage mouldings 50, 54.

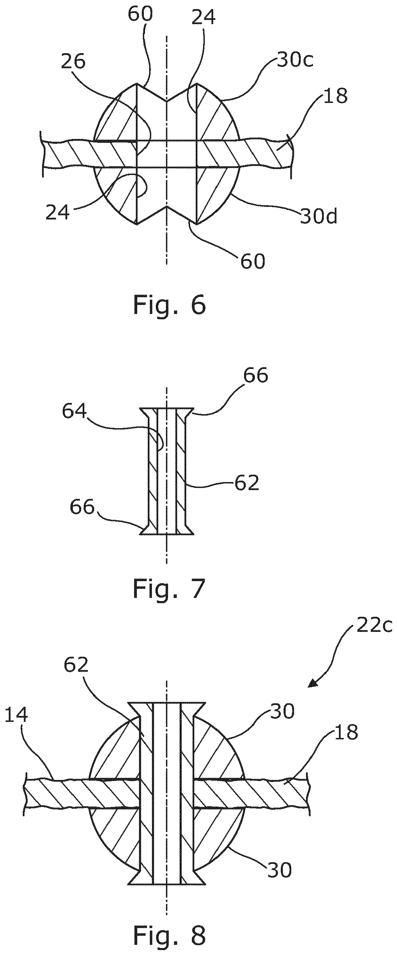

Figures 6 to 8 illustrate a further embodiment of a mounting bush 22c; which can be moulded in two stages. In a first stage as illustrated in Figure 6, annular flange or body portions 30c, 30d are moulded on either side of the cushion material 14 about the aperture 26. The flange portions 30 each have a central aperture 24 that aligns with the aperture 26 in the cushion material. The flange portions 30 are part spherical, and are counter sunk 60 about the central aperture 24 on their outer surfaces.

In a second stage, a central body portion 62 (illustrated separately in Figure 7) is moulded within the central apertures 24 of the flange portions 30 and the aperture 26 in cushion material 14. The central body portion 62 is in the form of an annular cylinder having a through bore 64. The central body portion 62 has radially outwardly directed flanges 66 at either end, which locate in the counter sunk recesses 60 of the flange portions 30 so as to lock the assembly together; with the cushion material firmly clamped between the flange portions in the completed bush as shown in Figure 8.

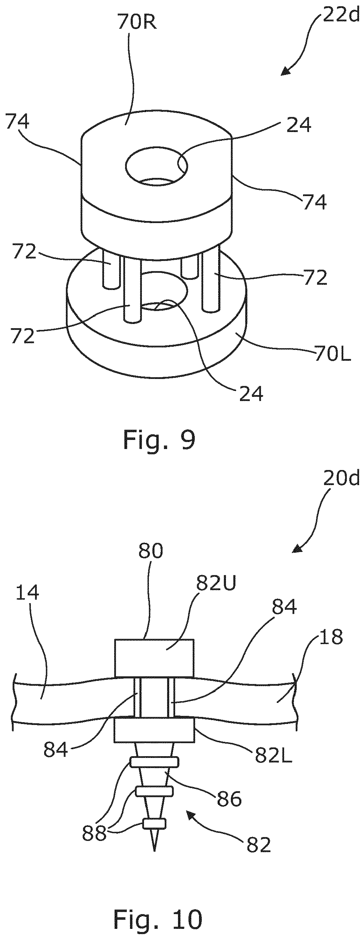

The mounting bushes 22a, 22b, 22c described above are moulded to the cushion material 14 in the mounting region 18 after the aperture 26 is formed in the cushion material. Figure 9 illustrates a further alternative embodiment of a mounting bush 22d, which can be moulded either before or after the aperture 26 is formed in the mounting region. The bush 22d does not have a central body portion; but has two substantially planar, annular body portions 70L, 70R which are moulded to either side of the cushion material on the mounting region 18. (The distance between body portions 70L and 70R is exaggerated in the Figure to allow the structure to be seen) Each body portion has an aperture 24 extending through it. The apertures 24 are aligned with one another on a common axis. A number of projections 72 (four in this case) extend between the body portions 70 through the cushion material. The projections are arranged on a diameter which is larger than that of the apertures 24 in the body portions. The projections serve to connect the body portions 70; and to resist rotation of the body portions 70 relative to the cushion material 14. Where the mounting bush 22d is moulded after an aperture 26 is formed in the cushion material, the bush is moulded so that the apertures 24 in the body portions align with the aperture 26 in the cushion material, which is substantially the same size as the apertures 24. However, the mounting bush can be moulded to the mounting region before an aperture 26 is formed through the cushion material. In this case, the aperture 26 in the cushion material can be produced at any suitable time prior to or whilst fitting the airbag to a vehicle with a fastener mounted through the bush. In one embodiment, the aperture 26 through the cushion material 14 is formed by pressing a bolt or other fastener through the bush and the cushion material, whilst the airbag is being assembled. The bolt or fastener may be provided with a pointed and tapered end to make it easier to push through the material. At least once the aperture 26 is formed, the mounting bush 22d can be said to define a through bore comprising the aligned apertures 24 in the opposed body portions; and the aperture 26 in the cushion material.

Figure 10 illustrates an alternative mounting member 20d in the form of a push-fit mounting fastener 80. The mounting member 20d according to this embodiment includes an integrally moulded clip 82 for insertion into an aperture in the vehicle body to secure the mounting region to the vehicle body. The mounting fastener 80 has a pair of body portions 82U, 82L moulded to either side of the cushion material 14 on the mounting region 18c (Fig. 2). A number of projections 84 extend between the body portions 82U, 82L through the cushion material. The projections 84 interconnect the body portions 82U, 82L; and help to resist rotation of the body portions 82U, 82L relative to the cushion material. The moulded clip 82 projects outwardly from an outer end face of body portion 82L. The clip 82 in this embodiment is in the form of a so called "fir-tree" clip having a central spigot-like body 86 with a number of resiliently flexible circumferential ribs or flanges 88 spaced apart along its length. In use, the clip is pressed into a hole in a body panel until the clip is firmly engaged in the hole; with at least one of the flanges engaged with the panel on its far side. In the embodiment illustrated, the clip is tapered, having a conical body 86; and the outer diameter of the ribs 88 increases towards the body portion 82L. This enables the clip to be used with a range of different sized holes. However, this is not essential, and the clip can have a substantially constant diameter along its length; although the free outer end will usually be tapered for ease of insertion. The use of a mounting member in the form of a push-fit mounting fastener 80 has the advantage of both reinforcing the cushion material 14 in the mounting region; and also of eliminating the need to use a bolt or other threaded fastener to secure the mounting region to the vehicle body, thus saving weight and eliminating the possibility of cross-threading.

Most airbag cushions 12 will have a number of mounting regions 18; and a mounting member 20 will usually be moulded to each mounting region. However, this is not essential; and in some cases, it may be appropriate to only mould a mounting member 20 to one or to some of the mounting regions. All the mounting members 20 moulded to an airbag cushion 12 may be the same, or at least the same type. However, it will be appreciated that a mixture of different types of moulded mounting member 20 could be used on any given airbag, enabling the use of a mixture of push fit clips and threaded fasteners inserted through moulded bushes to attach the airbag.

The mounting members 20; especially mounting bushes 22a, 22b, 22c, 22d; may be symmetrical on either side of the cushion material and/or rotationally. This is advantageous in certain circumstances, as it potentially allows a curtain airbag cushion 12 to be produced which is not restricted to use on one side of a vehicle or the other after the mounting members are moulded in place. In some cases, the curtain airbag cushion will not become a handed component until it is rolled prior to assembly. However, the outer profile of a mounting member 20 need not be symmetrical; and could be profiled on at least one side of the mounting region to fit in or against a feature of the vehicle body. This is illustrated in Figure 9, where at least one of the body portions 70 has flat sections 74 in an otherwise circular outer periphery to enable the mounting bush to be fitted against a ridge or other feature of the vehicle body. This concept is not limited to the use of flat sections in an otherwise circular peripheral profile; but can encompass any suitable profiling to enable a mounting member to be fitted in or against a feature on the vehicle body or other fixture. This concept can be applied to any of the mounting members described herein.

The above embodiments are described by way of example only. Many variations are possible without departing from the scope of the invention as defined in the appended claims.

## Claims

1. A vehicle curtain airbag (10) comprising an inflatable cushion (12) made from flexible material (14) defining at least one internal chamber (16), the material also defining a plurality of mounting regions (18a, 18b, 18c) for attachment of the airbag cushion to a fixing point in a vehicle, wherein a plurality of polymeric mounting members (20a, 20b, 20c, 20d, 22c, 22d) are moulded to the airbag cushion (12) within at least two of the mounting regions (18a, 18b, 18c);
**characterized in that**:
at least one polymeric mounting member (20a, 20b, 20c, 20d, 22c, 22d) is profiled to fit within or against a feature of a vehicle cant rail to which it is to be assembled in use.

2. A vehicle airbag (10) as claimed in claim 1, wherein the mounting members comprise mounting bushes (22a, 22b, 22c, 22d) defining through bores (24, 64).

3. A vehicle airbag (10) as claimed in claim 2, wherein an aperture (26) is defined in the mounting region (18a, 18b, 18c) in alignment with each through bore (24, 64).

4. A vehicle airbag (10) as claimed in claim 1, wherein at least one moulded mounting member (20d) comprises a push-fit mounting fastener (80).

5. A vehicle curtain airbag (10) as claimed in claim 4, wherein at least one mounting member (20d) comprises an integrally moulded push-fit clip (82) for insertion into an aperture in a vehicle fixing point.

6. A vehicle curtain airbag (10) as claimed in claim 1, wherein at least one of the mounting members (20a, 20b, 20c) is a mounting bush (22a, 22b, 22c, 22d) according to claim 2, and at least one of the mounting members (20d) is a push-fit mounting fastener (80) according to claim 4 or claim 5.

7. A vehicle curtain airbag (10) as claimed in any one of the preceding claims, wherein at least one mounting member (20a, 20b, 20c, 20d, 22c, 22d) has opposed portions (30R, 30L, 30a, 30b, 30c, 30d, 82U, 82L, 70R, 70L) located on either side of the cushion material (14) in said mounting region (18a, 18b, 18c).

8. A vehicle curtain airbag (10) as claimed in claim 7, wherein the mounting member (20d, 22d) has a plurality of spaced projections (84, 72) which extend through the material (14) between the opposed portions (82U, 82L; 70R, 70L).

9. A vehicle curtain airbag (10) as claimed in claim 8, wherein the airbag cushion material (14) is a fabric, and material defining the mounting member (20d, 22d) penetrates between fibres of the fabric.

10. A vehicle comprising a vehicle curtain airbag (10) according to any one of the preceding claims.

11. A method of manufacturing a vehicle curtain airbag (10) comprising an inflatable cushion (12) made from flexible material (14) defining at least one internal chamber (16), the method being **characterized in** comprising moulding a plurality of polymeric mounting members (20a, 20b, 20c, 20d, 22c, 22d) to the airbag cushion (12) within non-inflatable mounting regions (18) of the cushion (12);
wherein
at least one polymeric mounting member (20a, 20b, 20c, 20d, 22c, 22d) is profiled to fit within or against a feature of a vehicle cant rail to which it is to be assembled in use.

12. A method as claimed in claim 11 the method comprising moulding the mounting member (20a, 20d, 22d) in a single stage moulding process.

13. A method as claimed in claim 11, the method comprising moulding the mounting member (22b, 22c) in a multiple stage moulding process.

## Patentansprüche

1. Fahrzeugvorhangairbag (10), umfassend ein aufblasbares Kissen (12), das aus flexiblem Material (14) angefertigt ist, das mindestens eine innere Kammer (16) definiert, wobei das Material ebenso eine Vielzahl von Montagebereichen (18a, 18b, 18c) zum Befestigen des Airbagkissens an einem Fixierungspunkt in einem Fahrzeug definiert, wobei eine Vielzahl von polymeren Montageelementen (20a, 20b, 20c, 20d, 22c, 22d) an das Airbagkissen (12) innerhalb mindestens zwei der Montagebereiche (18a, 18b, 18c) geformt sind;
**dadurch gekennzeichnet, dass:**
mindestens ein polymeres Montageelement (20a, 20b, 20c, 20d, 22c, 22d) profiliert ist, um innerhalb oder gegen ein Merkmal eines Fahrzeugdachlängsträgers zu passen, an die es in Verwendung angebaut werden soll.

2. Fahrzeugairbag (10) nach Anspruch 1, wobei die Montageelemente Montagebuchsen (22a, 22b, 22c, 22d) umfassen, die durch Bohrungen (24, 64) definiert sind.

3. Fahrzeugairbag (10) nach Anspruch 2, wobei eine Öffnung (26) in dem Montagebereich (18a, 18b, 18c) in Ausrichtung mit jeder Durchgangsbohrung (24, 64) definiert ist.

4. Fahrzeugairbag (10) nach Anspruch 1, wobei mindestens ein geformtes Montageelement (20d) ein Schiebepassungsmontagebefestigungsmittel (80) umfasst.

5. Fahrzeugvorhangairbag (10) nach Anspruch 4, wobei mindestens ein Montageelement (20d) einen einstückig geformten Schiebepassungsclip (82) für ein Einsetzen in eine Öffnung in einem Fahrzeugfixierungspunkt umfasst.

6. Fahrzeugvorhangairbag (10) nach Anspruch 1, wobei mindestens eines der Montageelemente (20a, 20b, 20c) eine Montagebuchse (22a, 22b, 22c, 22d) nach Anspruch 2 ist, und mindestens eines der Montageelemente (20d) ein Schiebepassungsmontagebefestigungsmittel (80) nach Anspruch 4 oder Anspruch 5 ist.

7. Fahrzeugvorhangairbag (10) nach einem der vorstehenden Ansprüche, wobei mindestens ein Montageelement (20a, 20b, 20c, 20d, 22c, 22d) gegenüberliegende Abschnitte (30R, 30L, 30a, 30b, 30c, 30d, 82U, 82L, 70R, 70L) aufweist, die sich auf beiden Seiten des Kissenmaterials (14) in dem Montagebereich (18a, 18b, 18c) befinden.

8. Fahrzeugvorhangairbag (10) nach Anspruch 7, wobei das Montageelement (20d, 22d) eine Vielzahl von beabstandeten Vorsprüngen (84, 72) aufweist, die sich durch das Material (14) zwischen den gegenüberliegenden Abschnitten (82U, 82L, 70R, 70L) erstrecken.

9. Fahrzeugvorhangairbag (10) nach Anspruch 8, wobei das Airbagkissenmaterial (14) ein Gewebe ist und Material, das das Montageelement (20d, 22d) definiert, zwischen Fasern des Gewebes eindringt.

10. Fahrzeug, umfassend einen Fahrzeugvorhangairbag (10) nach einem der vorstehenden Ansprüche.

11. Verfahren zum Herstellen eines Fahrzeugvorhangairbags (10), umfassend ein aufblasbares Kissen (12), das aus flexiblem Material (14) angefertigt ist, das mindestens eine innere Kammer (16) definiert, wobei das Verfahren **gekennzeichnet ist durch** ein Umfassen eines Formens einer Vielzahl von polymeren
Montageelementen (20a, 20b, 20c, 20d, 22c, 22d) an das Airbagkissen (12) innerhalb nicht aufblasbarer Montagebereiche (18) des Kissens (12);
wobei
mindestens ein polymeres Montageelement (20a, 20b, 20c, 20d, 22c, 22d) profiliert ist, um innerhalb oder gegen ein Merkmal eines Fahrzeugdachlängsträgers zu passen, an die es in Verwendung angebaut werden soll.

12. Verfahren nach Anspruch 11, das Verfahren umfassend das Formen des Montageelements (20a, 20d, 22d) in einem einstufigen Formvorgang.

13. Verfahren nach Anspruch 11, das Verfahren umfassend das Formen des Montageelements (22b, 22c) in einem mehrstufigen Formvorgang.

## Revendications

1. Rideau gonflable de véhicule (10) comprenant un coussin gonflable (12) fait d'un matériau souple (14) définissant au moins une chambre interne (16), le matériau définissant également une pluralité de régions de montage (18a, 18b, 18c) pour la fixation du coussin gonflable à un point de fixation dans un véhicule, dans lequel une pluralité d'éléments de montage polymères (20a, 20b, 20c, 20d, 22c, 22d) sont moulés sur le coussin gonflable (12) à l'intérieur d'au moins deux des régions de montage (18a, 18b, 18c) ;
**caractérisé en ce que** :
au moins un élément de montage polymère (20a, 20b, 20c, 20d, 22c, 22d) est profilé pour s'adapter à l'intérieur de ou contre une caractéristique d'un brancard de véhicule auquel il doit être assemblé en cours d'utilisation.

2. Sac gonflable de véhicule (10) selon la revendication 1, dans lequel les éléments de montage comprennent des bagues de montage (22a, 22b, 22c, 22d) définissant des alésages traversants (24, 64).

3. Sac gonflable de véhicule (10) selon la revendication 2, dans lequel une ouverture (26) est définie dans la région de montage (18a, 18b, 18c) en alignement avec chaque alésage traversant (24, 64).

4. Sac gonflable de véhicule (10) selon la revendication 1, dans lequel au moins un élément de montage moulé (20d) comprend un élément de fixation de montage par emboîtement (80).

5. Rideau gonflable de véhicule (10) selon la revendication 4, dans lequel au moins un élément de montage (20d) comprend un clip à emboîtement moulé d'un seul tenant (82) pour l'insertion dans une ouverture dans un point de fixation de véhicule.

6. Rideau gonflable de véhicule (10) selon la revendication 1, dans lequel au moins l'un des éléments de montage (20a, 20b, 20c) est une bague de montage (22a, 22b, 22c, 22d) selon la revendication 2, et au moins l'un des éléments de montage (20d) est un élément de fixation de montage par emboîtement (80) selon la revendication 4 ou la revendication 5.

7. Rideau gonflable de véhicule (10) selon l'une quelconque des revendications précédentes, dans lequel au moins un élément de montage (20a, 20b, 20c, 20d, 22c, 22d) a des parties opposées (30R, 30L, 30a, 30b, 30c, 30d, 82U, 82L, 70R, 70L) situées de chaque côté du matériau de coussin (14) dans ladite région de montage (18a, 18b, 18c).

8. Rideau gonflable de véhicule (10) selon la revendication 7, dans lequel l'élément de montage (20d, 22d) a une pluralité de saillies espacées (84, 72) qui s'étendent à travers le matériau (14) entre les parties opposées (82U, 82L, 70R, 70L).

9. Rideau gonflable de véhicule (10) selon la revendication 8, dans lequel le matériau de coussin gonflable (14) est un tissu, et un matériau définissant l'élément de montage (20d, 22d) pénètre entre des fibres du tissu.

10. Véhicule comprenant un rideau gonflable de véhicule (10) selon l'une quelconque des revendications précédentes.

11. Procédé de fabrication d'un rideau gonflable de véhicule (10) comprenant un coussin gonflable (12) fait d'un matériau souple (14) définissant au moins une chambre interne (16), le procédé étant **caractérisé en ce qu'**il comprend le moulage d'une pluralité d'éléments
de montage polymères (20a, 20b, 20c, 20d, 22c, 22d) sur un coussin gonflable (12) à l'intérieur de régions de montage non gonflables (18) du coussin (12) ;
dans lequel
au moins un élément de montage polymère (20a, 20b, 20c, 20d, 22c, 22d) est profilé pour s'adapter à l'intérieur de ou contre une caractéristique d'un brancard de véhicule auquel il doit être assemblé en cours d'utilisation.

12. Procédé selon la revendication 11, le procédé comprenant le moulage de l'élément de montage (20a, 20d, 22d) dans un procédé de moulage à une seule étape.

13. Procédé selon la revendication 11, le procédé comprenant le moulage de l'élément de montage (22b, 22c) dans un processus de moulage à étapes multiples.
